# EUROPEAN PATENT APPLICATION

(11) **EP 1 746 333 A1**
(43) Date of publication of application: **24.01.2007**
(21) Application number: 05425519.5
(22) Date of filing: 20.07.2005
(51) Int. Cl.: F16M 11/42, F16M 11/12, F16M 11/18, B61B 13/04

(54) **A unit for moving television cameras or film cameras**

(71) Applicant: Piumaworld S.r.l., 20133 Milano, MI (IT)
(72) Inventor: Carbonera, Claudio, 20047 Brugherio MI (IT)
(74) Representative: Cattaneo, Elisabetta

(57) **Abstract**

A unit for moving a television camera comprises guide means (10), a dolly (2) suitable for supporting the television camera and associated in a smooth-running manner with the guide means (10), and drive means (12) for moving the dolly (2) along the guide means (10). The drive means (12) are supported by the dolly (2) at a predetermined point (P) of the dolly (2) and engage the guide means (10) in a predetermined portion (Q) thereof, the position of this predetermined portion (Q) of the guide means (10) varying according to the position adopted by the dolly (2) along the guide means (10). Advantageously, the drive means (12) are supported movably by the dolly (2) so as to adapt their position relative to that of the guide means (10) during the movement of the dolly (2).

## Description

The present invention relates to a unit for moving a filming device such as a film camera, a video camera, a television camera or the like, according to the preamble to Claim 1.

For simplicity of explanation, this description is given in non-limiting manner with reference to a television camera as the filming device.

In the television or cinematographic filming field, there is frequently a need to move the camera during filming. In particular, in order to take shots in an outside environment the television camera must be movable by as much as several metres so as to be able to follow the subject to be filmed during movement of the subject.

In this connection, it should be pointed out that the solution of moving the entire television camera manually during filming is not readily practicable since the weight and bulk of television cameras does not allow a fluid movement to be achieved during filming.

To satisfy the above-mentioned need, television cameras are mounted on dollies which can run on tracks that have lengths of as much as ten metres or more. It should be pointed out that the television camera is not generally mounted directly on the dollies but is supported by a "fluid"-type head which in turn is supported by the dolly. The head can cause the television camera to perform PAN, TILT and/or ROLL rotations. In particular:
- the PAN movement consists of a panoramic rotation about an axis perpendicular to the ground which the head can cause the television camera to perform,
- the TILT movement consists of a rotation about a first horizontal axis which the head can cause the television camera to perform, and
- the ROLL movement consists of a rotation about a second horizontal axis, perpendicular to the above-mentioned first horizontal axis, which the head can cause the television camera to perform.

The combination of the above-mentioned PAN, TILT and ROLL movements, together with the forward movement of the dolly along the supporting tracks, enables the television camera to be moved in the desired manner during filming.

The need which the dollies of the type discussed above have to satisfy is that they should be capable of being motorized so as to allow the dolly to move along the tracks in the desired manner during filming. Moreover, this latter need is of fundamental importance for television cameras which are to be operated remotely, for example, because they cannot be reached directly.

The dollies according to the prior art have a series of problems in relation to their motorization. In fact the need to be able to move the dollies also along curved portions of track leads to the need to be able to provide driving and steering wheels in the dollies with the structural complications which this construction involves.

The problem underlying the present invention is that of devising and making available a unit for moving a filming device such as a television camera, a film camera, a video camera, or the like which has structural and functional characteristics such as to satisfy the above-mentioned needs, at the same time overcoming the disadvantages mentioned with reference to the prior art.

This problem is solved by a unit for moving a filming device such as a television camera, a film camera, a video camera, or the like according to the features of Claim 1.

Further features and the advantages of the unit for moving a filming device according to the present invention will become clear from the following description of a preferred embodiment thereof which is given by way of non-limiting example with reference to the appended drawings, in which:
- Figure 1 is a perspective view of the unit for moving a filming device according to the invention,
- Figure 2 is a perspective view, from below, of a detail of the unit of Figure 1 relating to the dolly,
- Figure 3 is a simplified view, from above, of a detail of the unit of Figure 1 in a condition of use,
- Figure 4 is a front view of the detail of Figure 3,
- Figure 5 shows the detail of Figure 3 in a different condition of use,
- Figure 6 shows the detail of Figure 4 in a different condition of use,
- Figure 7 is a perspective view of the unit of Figure 1 in an inverted configuration of use,
- Figure 8 shows the detail of Figure 4 according to a different embodiment,
- Figure 9 shows the detail of Figure 8 in a different condition of use,

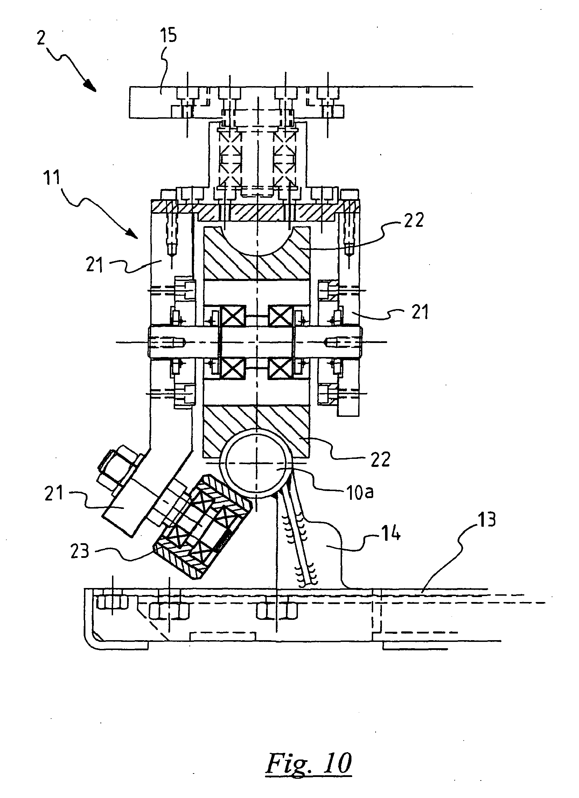

- Figure 10 is a front view, in partial section, of a detail of the dolly of Figure 2 relating to the support means of the dolly,

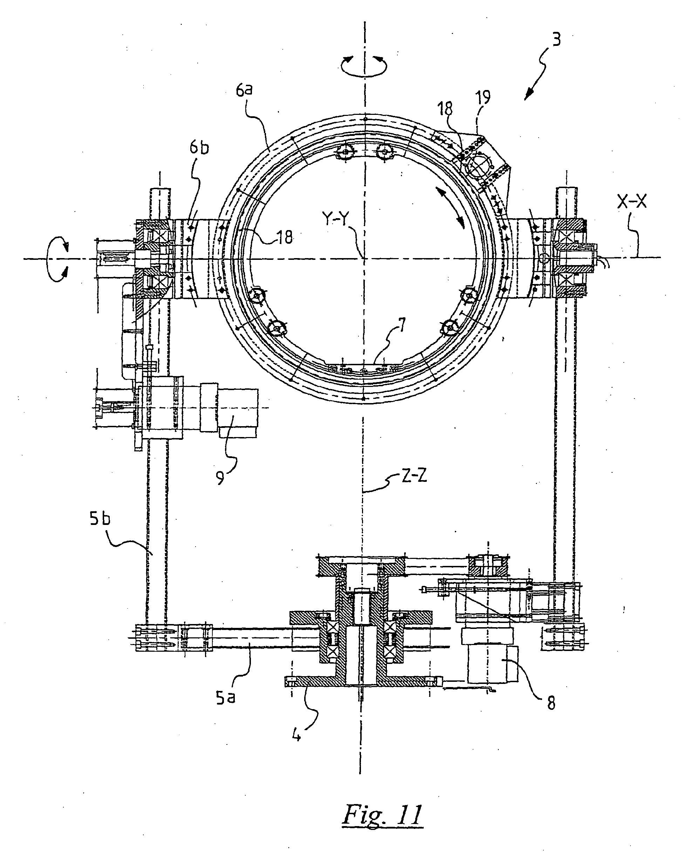

- Figure 11 is a front view, in partial section and with some parts missing, of a detail of the device relating to the head, and
- Figure 12 represents a second embodiment of the support surface of the dolly of Figure 2.

With reference to the appended drawings, a unit for moving a filming device is generally indicated 1; in the embodiment shown, the filming device is a television camera indicated in broken outline and marked with the letter C.

The unit 1 comprises:
- guide means 10,
- a dolly 2 suitable for supporting the television camera C,
- support means engaged with the guide means 10 in a smooth-running manner in order to support the dolly 2 in a stable manner relative to the guide means 10 so as above all to allow the dolly 2 to move along the guide means 10, and
- drive means 12 for moving the dolly along the guide means 10.

According to the preferred embodiment shown, the dolly 2 supports the television camera C with the interposition of an head 3 which is associated with the support 2 to allow the television camera C to perform PAN, TILT and/or ROLL movements. In particular, the head 3 allows the television camera C to perform PAN rotational movements about a vertical axis Z-Z, TILT rotational movements about a first horizontal axis X-X, and ROLL rotational movements about a second horizontal axis Y-Y perpendicular to the first axis X-X, or a combination of these movements.

The head 3 comprises a fixed portion 4 suitable for supporting a first movable frame 5, with the interposition of bearings or functionally equivalent elements, in a manner such that the first frame 5 can rotate about the vertical PAN axis X-X. The first frame 5 comprises a base structure 5a which extends in a plane perpendicular to the axis Z-Z and from the opposite lateral extremities of which two opposed pairs of uprights 5b extend parallel to the vertical axis Z-Z.

Moreover, the head 3 comprises a second movable frame 6 which extends between the two opposed pairs of uprights 5b in order to be supported for rotation thereby, so as to be rotatable about the first horizontal TILT axis X-X. More particularly, the second frame 6 comprises a ring structure 6a from which two opposed lateral supports 6b extend; the second frame 6 is supported on the lateral supports 6b by the opposed uprights 5b in the manner just described. The ring 6a of the frame 6 is positioned so as to be above the fixed portion 4, with reference to the vertical PAN axis Z-Z.

The internal circumference of the ring 6a is formed so as to define a sliding track for a carriage 7 to which the television camera C is firmly fixed. The carriage 7 is thus associated with the internal circumference of the ring 6a so as to be slidable along it and thus to perform the rotation about the ROLL axis Y-Y.

In view of the above-described structure of the head 3, a displacement of the carriage 7 around the internal circumference of the ring 6a leads to a rotation of the television camera C about the ROLL axis Y-Y.

There are associated with the head 3:
- drive means 8 for rotating the first movable frame 5 about the PAN axis Z-Z relative to the fixed portion 4,
- drive means 9 for rotating the second movable frame 6 about the TILT axis X-X relative to the first frame 5, and
- drive means for moving the carriage 7 along the sliding track 6a so as to bring about a rotation of the carriage 7 about the ROLL axis Z-Z; preferably, these drive means comprise a ring gear 18 which is slidably associated with the internal circumference of the ring 6a and is fixed firmly to the carriage 7 and which has an internal set of teeth meshed with a pinion 19 with which it forms a gear-and-pinion-type coupling; rotation of the ring gear 18 leads to rotation of the carriage 7 about the ROLL axis Z-Z; the pinion 19 is rotated by an electric motor 20.

The above-mentioned drive means 8 and 9 are of types known *per se* to a person skilled in the art and will not be described in detail below.

It should be pointed out that the above-described head corresponds to a preferred embodiment, but may be formed differently.

The fixed portion 4 of the head 3 can be connected to the structure of the dolly 2 releasably, for example, by means of a connection with bolts.

In the embodiment described, the guide means 10 of the dolly 2 comprise two opposed, uniformly-spaced rails 10a and 10b, respectively, extending along a predetermined axis A-A to constitute a rolling track for the support means.

Preferably, the two rails 10a, 10b have a substantially circular cross-section and are connected to one another rigidly by a plurality of connecting cross-members 13.

According to an advantageous aspect, the rails 10a and 10b are supported at a predetermined distance from the connecting cross-members 13 by means of supports 14 projecting from the connecting cross-members 13. Preferably, each support 14 is positioned so as to be connected to the respective rail 10a, 10b in a lateral portion thereof so as to avoid interference with the support means during the forward movement of the dolly 2. As can be seen from the drawings, the supports 14 contact the respective rails 10a, 10b laterally on their inner sides, that is to say, the side of each rail which faces the opposite rail.

The dolly 2 comprises a carrying structure 15 with which the above-mentioned support means that are engageable with the guide means 10 in a smooth-running manner are associated.

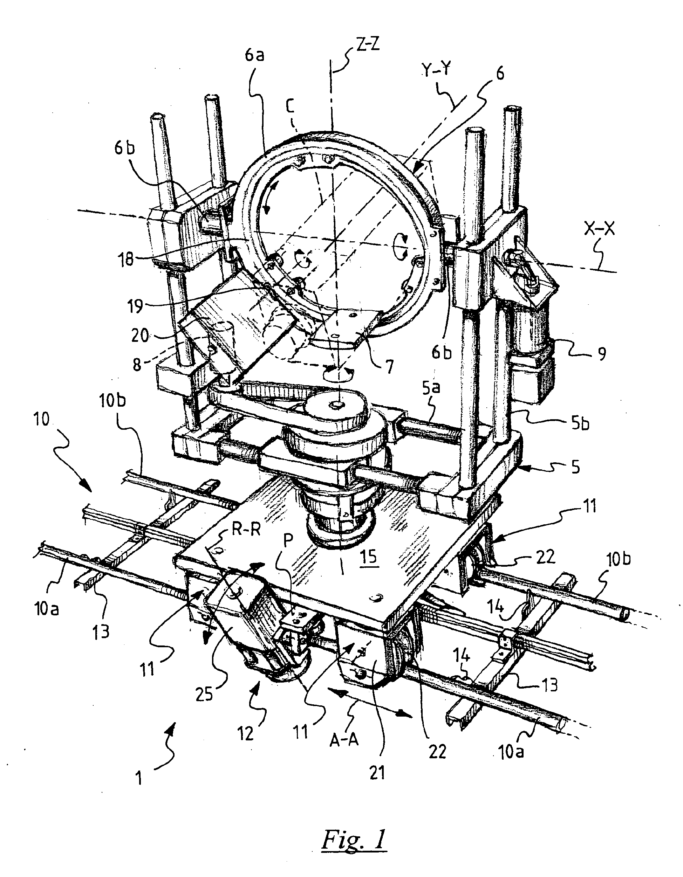

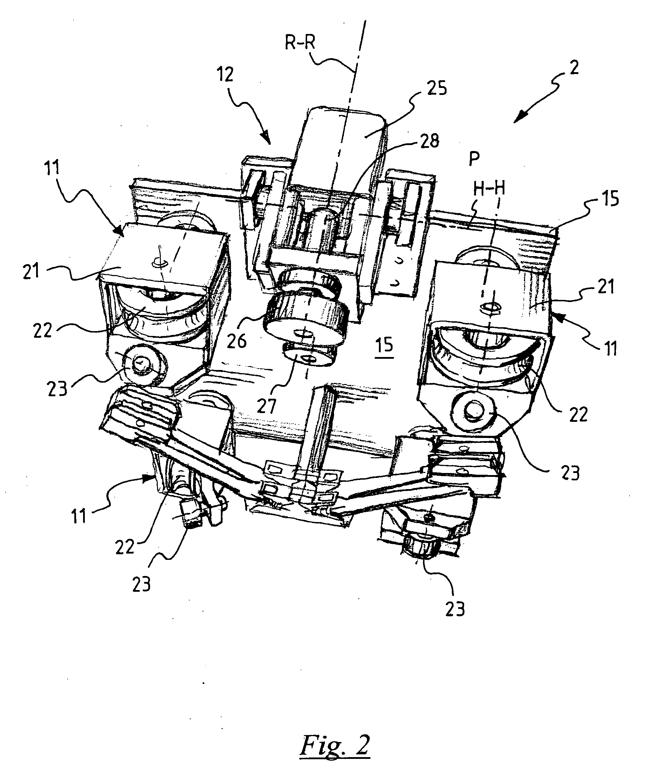

According to a simplified embodiment (see Figures 1, 2 and 7), the carrying structure 15 of the dolly 2 comprises a rectangular plate.

The support means can engage the guide means 10 in a captive manner. In the embodiment shown, the support means take the form of four support units 11 which are fixed to the carrying structure 15 of the dolly 2, each substantially at a corner of the rectangular plate of the dolly 2.

Each support unit 11 comprises an idle wheel 22 which can engage a respective rail 10a, 10b in a smooth-running manner and a support frame which can support the idle wheel 22 in a manner such that the wheel 22 can spin relative to the carrying structure 15 of the dolly 2 and allows the dolly to move along a curved rail. Moreover, each support unit 11 comprises a counteracting wheel 23 which is positioned so as to be in contact with the respective rail 10a, 10b and to cooperate with the respective idle wheel 22 to engage the rail. Basically, each counteracting wheel 23 is positioned in the vicinity of the respective idle wheel 22 so as to be disposed opposite the idle wheel 22 and at the same time to define therewith a seat in which the respective rail is inserted in a smooth-running and captive manner.

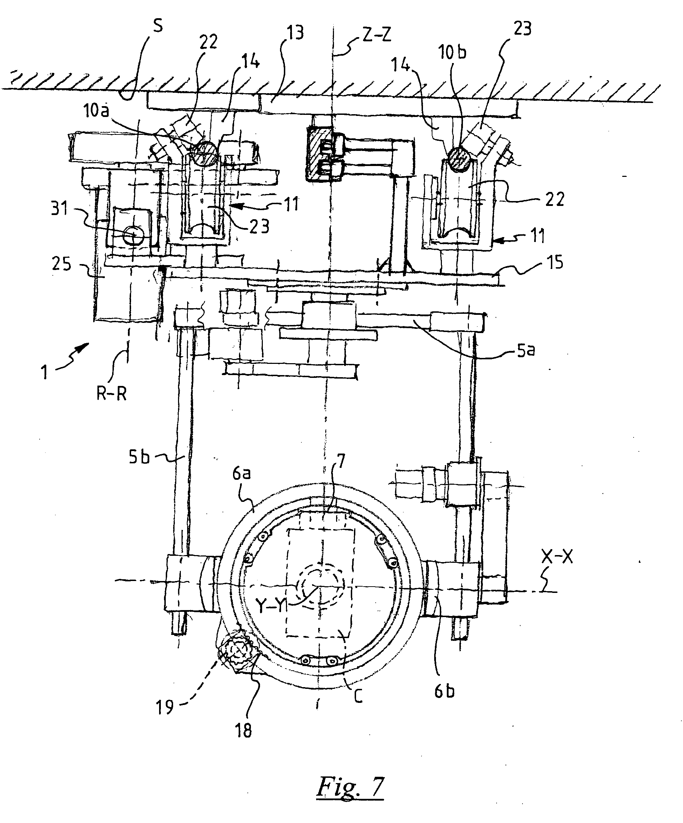

Advantageously, the feature of the support units 11 that they comprise a pair of opposed wheels, that is, the idle wheel 22 and the respective counteracting wheel 23, enables the dolly 2 to be restrained on the rails 10a, 10b so as to prevent undesired derailing or tipping over. Amongst other things, this allows the unit 1 according to the invention to be used both in the configuration shown in Figure 1, in which the dolly 2 is supported by the rails 10a, 10b, and in the configuration shown in Figure 7 in which the dolly 2 is suspended from the rails 10a, 10b which are fixed to the ceiling S.

As an alternative to the arrangement described, the support means may engage the guide means 10 with other elements such as sliding blocks or the like, instead of with wheels.

The drive means 12 are supported by the dolly 2 on a support P which is positioned along the side of the dolly 2 in an eccentric position relative to the rail 10a and in an intermediate position relative to the two support units 11 which engage the rail 10a.

Advantageously, the drive means 12 can engage the guide means 10, specifically the rail 10a, directly in a predetermined portion Q thereof. In this connection, it should be pointed out that the portion Q of the rail 10a which is engaged by the drive means 12 is not always the same but varies along the rail 10a according to the position adopted by the dolly 2 along the rails 10a and 10b.

In the embodiment described, the drive means 12 comprise a motor 25 and a drive roller 26 which is in engagement with the rail 10a in order to bring about the forward movement of the dolly 2 along the rails as a result of a rotation of the drive roller 26. For this purpose, the drive roller 26 is connected cinematically to the motor 25 by means of a mechanical transmission in order to be rotated by the motor 25 as required. Basically, the drive roller is keyed to the drive shaft 28 which extends from the motor 25 along a predetermined axis R-R.

As described for the support units 11, the drive means 12 comprise a counteracting idle roller 27 which is positioned so as to be in contact with the rail 10a and to cooperate with the drive roller 26 to engage the rail 10a. Basically, the counteracting idle roller 27 is positioned in the vicinity of the drive roller 26 so as to be disposed opposite the drive roller 26 and to define therewith a seat in which the rail 10a is inserted in a smooth-running and captive manner.

According to an advantageous aspect, the drive means 12 are supported by the dolly 2 so as to be at least partially movable relative thereto so as to be able to adapt their position relative to the guide means during the forward movement of the dolly 2 along the rails 10a, 10b.

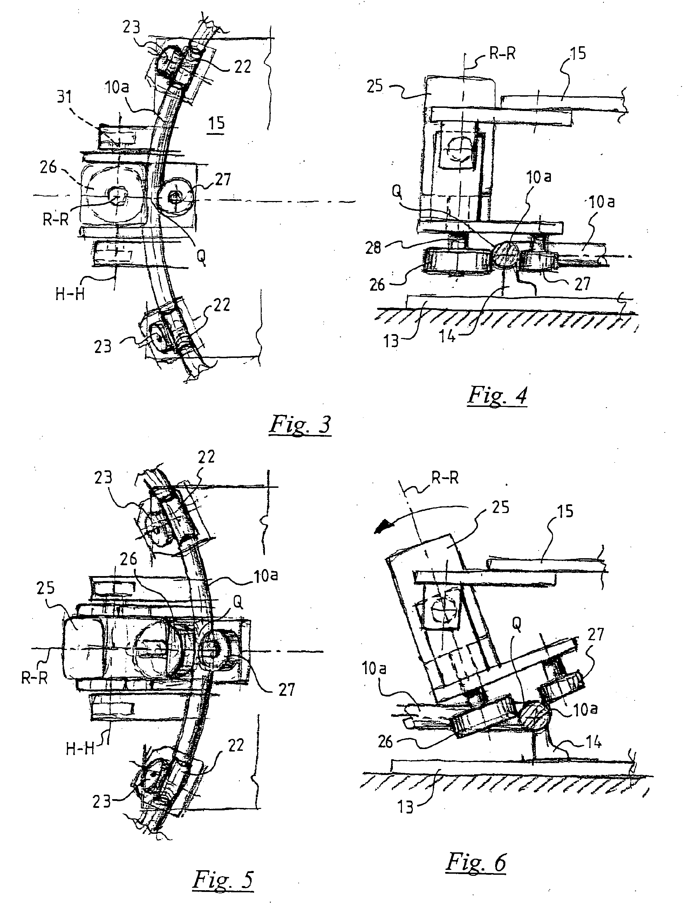

If the rails 10a and 10b also have a curved shape, the feature of the drive means 12 that they can adapt their position relative to that of the rails advantageously compensates for variations of position which may arise between the support P of the dolly 2 and the predetermined portion Q of the rail 10a on portions of the rail 10a having different radii of curvature, for example, a portion with a right-hand bend (Figure 3) and a portion with a left-hand bend (Figure 5), or a straight portion and a curved portion.

In particular, the drive means 12 are supported by the support P of the dolly 2 in a manner such that they can rotate about a swivel pin 31 of predetermined axis H-H oriented so as to be substantially parallel to the forward direction of the dolly 2. The pin 31 is therefore substantially parallel to the predetermined portion Q of the rail 10a engaged by the drive roller 26 and by the counteracting idle roller 27. This compensates for variations of inclination which may appear between the support P of the dolly 2 and the predetermined portion Q of the rail 10, in two different portions of the rail 10a having different radii of curvature.

Moreover, the drive means 12 engage the rail 10a in a manner such as to be able to perform a predetermined relative displacement thereto along the axis R-R, that is, substantially along the line joining the support P of the dolly 2 and the predetermined portion Q of the track 10, so as to compensate for variations in distance which may appear between the support P and the predetermined portion Q in two different portions of the rail 10a having different radii of curvature.

As described above, the motor 25 is articulated to the dolly 2 in the region of the support P so as to be able to perform an angular movement about the axis H-H so as to adapt its inclination to the rail 10 during the displacement of the dolly. Clearly, a rotation of the motor 25 about the axis H-H leads to a corresponding rotation of the drive shaft 28, of the drive roller 26, and of the counteracting idle roller 27.

It is worth mentioning that the drive roller 26 and the counteracting idle roller 27 engage the rail 10a with only a portion of their respective side walls which extends parallel to the axis R-R so that they can slide relative to the rail 10a in the axial direction R-R. Consequently, by making use of the length of the side wall of the drive roller 26 and of its counteracting idle roller 27, it is possible to compensate for limited displacements of the drive roller 26 and of the counteracting idle roller 27 in the axial direction R-R, relative to the rail 10a.

Figures 3 and 4 show a limit condition in which the rail 10a has a marked right-hand bend and Figures 5 and 6 show the opposite limit condition in which the rail 10a has a marked left-hand bend. In view of the fact that the drive means 12 are fixed laterally to the rectangular plate of the carrying structure 15 of the dolly 2 in an intermediate position between the two support units 11 in engagement with the rail 10a, when there is a change in the radius of curvature of the rail 10a, the drive roller 26 and the counteracting idle roller 27 necessarily have to be able to change their inclination and distance along the axis R-R relative to the rail 10a in order to remain in contact therewith, as is clear from Figures 3 and 4.

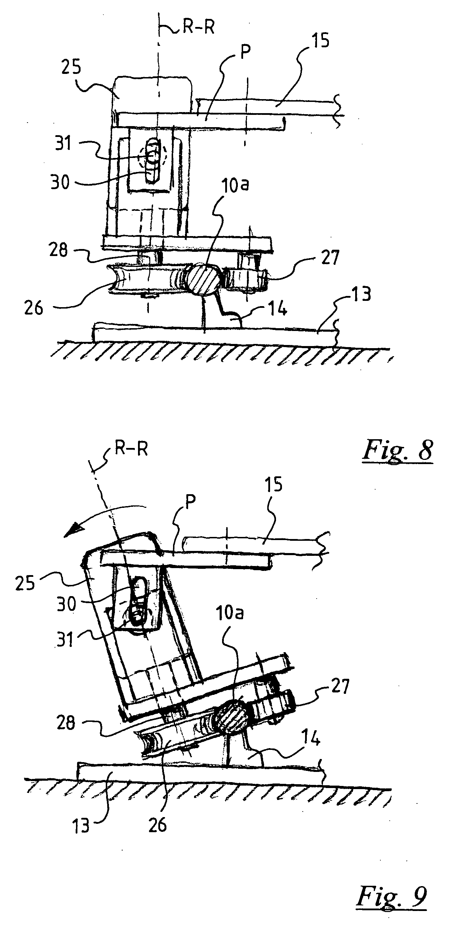

According to the alternative embodiment shown in Figures 8 and 9, the change in distance between the support point P of the dolly 2 and the portion Q of the rail 10a that is engaged by the drive roller 26 and by the counteracting idle roller 27 can be achieved by supporting the drive means 12 relative to the dolly 2 with the interposition of connection means which can allow the drive means 12 to perform, relative to the support P, a relative displacement having a component perpendicular to the forward direction of the dolly. For example, this can easily be achieved as shown in Figures 8 and 9, that is, by providing, in the support P, a vertically extending slot 30 in which the pin 31 is free to rotate and translate.

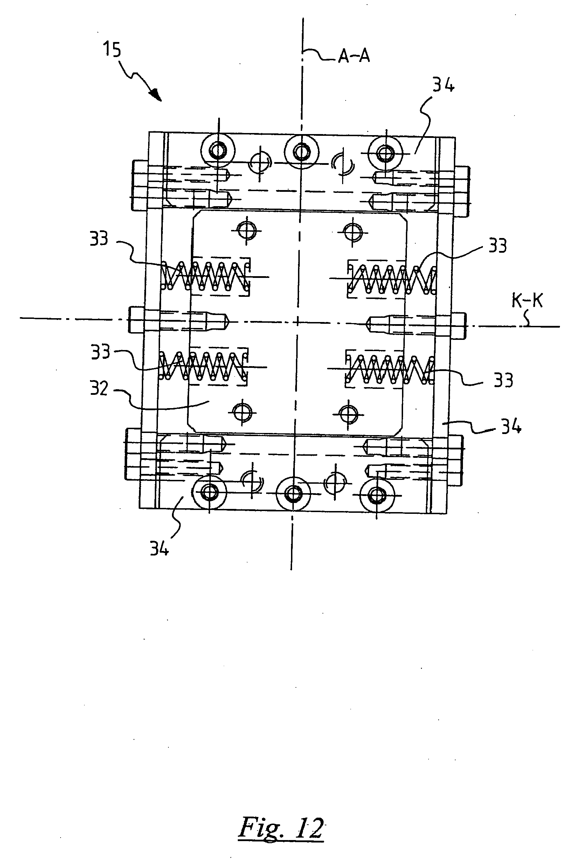

According to a preferred embodiment shown in Figure 12, the plate of the carrying structure 15 of the dolly 2 comprises a fixed portion 34 and a slide 32 which is supported slidably by the fixed portion so as to be able to slide between two opposite travel-limit positions along an axis K-K transverse the forward direction of the dolly 2 along the rails 10a, 10b. Moreover, the dolly comprises resilient means 33 which can act on the slide so as to keep it, with a predetermined resilient load, in an intermediate position between the two above-mentioned travel-limit positions. In this case, the fixed portion 4 of the head 3 is advantageously fixed to the slide 32 so that, during the movement of the dolly 2, the force exerted by the resilient means on the slide 32 on curved portions of the rails 10a and 10b ensures greater stability of the dolly 2 and of the head 3 during filming.

The unit 1 according to the invention further comprises a pair of electrical channels which extend parallel to the rails 10a and 10b and which can be contacted by a pantograph device mounted on the dolly in order to ensure the correct electrical supply to the electric motors of the dolly, to the electric motors of the head, as well as to the television camera C.

Moreover, the dolly 2 and the head 3 are provided with radio-control means and/or wire-guided means suitable for the remote control of the operation of the various electrical components mounted on the dolly 2.

As can be appreciated from the description, the unit for moving a filming device according to the present invention satisfies the above-mentioned needs and at the same time overcomes the disadvantages referred to in the introductory part of the present description with reference to the prior art. In fact the unit according to the invention enables the dolly to be motorized so as to cause it to advance along the guide means directly and without particular constructional difficulties.

Another advantage of the unit for moving a filming device according to the present invention lies in the possibility of installing the drive means only when automatic movement of the dolly is required.

Yet another advantage of the unit for moving a filming device according to the present invention lies in the fact that the dolly can be used both in a configuration in which the dolly is supported by the guide means and in a configuration in which the dolly is suspended from the guide means, the drive means being usable to bring about the displacement of the dolly in both of the above-mentioned configurations.

Naturally, in order to satisfy contingent and specific requirements, a person skilled in the art will be able to apply to the above-described unit for moving a filming device many modifications and variations all of which, however, are included within the scope of protection of the invention as defined by the appended claims.

## Claims

1. A unit for moving a filming device (C) such as a television camera, a film camera, or a video camera, comprising:
- guide means (10),
- a dolly (2) suitable for supporting a filming device (C),
- support means (11) engaged with the guide means (10) in a smooth-running manner in order to support the dolly (2) in a stable manner relative to the guide means (10) so as to allow the dolly (2) to move along the guide means (10), and
- drive means (12) for moving the dolly (2) along the guide means (10), the drive means (12) being supported by the dolly (2) at a predetermined point (P) of the dolly (2),
**characterized in that**:
- the drive means (12) engage the guide means (10) in a predetermined portion (Q) thereof in order to bring about the displacement of the dolly (2) along the guide means (10), the predetermined portion (Q) of the guide means (10) engaged by the drive means (12) varying according to the position adopted by the dolly (2) along the guide means (10),
- the drive means (12) are supported movably by the dolly (2) so as to adapt their position relative to the position of the guide means (10) during the movement of the dolly (2) along the guide means (10) so as to compensate for variations of position which may appear between the predetermined point (P) of the dolly (2) and the predetermined portion (Q) of the guide means (10) on different portions of the guide means (10) having different radii of curvature.

2. A unit according to Claim 1, in which the drive means (12) are supported by the dolly (2) in a manner such that they can rotate about a rotation axis (H-H) positioned relative to the dolly (2) in a manner such as to be oriented substantially in the forward direction of the dolly (2) so as to compensate for variations of inclination which may appear between the predetermined point (P) of the dolly (2) and the predetermined portion (Q) of the guide means (10) on different portions of the guide means (10) having different radii of curvature.

3. A unit according to Claim 1 or Claim 2, in which the drive means (12) engage the guide means (10) in a manner such that they can perform a predetermined relative displacement to the guide means (10) substantially along the line joining the predetermined point (P) of the dolly (2) and the predetermined portion (Q) of the guide means (10), so as to compensate for variations of distance which may appear between the predetermined point (P) of the dolly (2) and the predetermined portion (Q) of the guide means (10) on different portions of the guide means (10) having different radii of curvature.

4. A unit according to Claim 1 or Claim 2, in which the drive means (12) are supported by the dolly (2) with the interposition of connecting means (30, 31) which can allow the drive means (12) to perform, relative to the predetermined point (P) of the dolly (2), a relative displacement having a component perpendicular to the forward direction of the dolly (2) so as to allow the drive means (12) to vary their distance from the predetermined point (P) of the dolly (2) to compensate for variations of distance which may appear between the predetermined point (P) of the dolly (2) and the predetermined portion (Q) of the guide means (10) on different portions of the guide means (10) having different radii of curvature.

5. A unit according to any one of Claims 1 to 4, in which the guide means (10) comprise at least one rail (10a, 10b) which is intended to constitute a track for the support means (11).

6. A unit according to Claim 5, in which the at least one rail is two opposed, uniformly-spaced rails (10a, 10b).

7. A unit according to Claim 5, in which the at least one rail (10a, 10b) is a rail of substantially circular cross-section, which is supported in a lateral portion thereof so as to avoid interference with the support means (11) during the forward movement of the dolly (2).

8. A unit according to any one of Claims 1 to 7, in which the drive means (12) comprise a motor (25) and a drive roller (26) which is in engagement with the guide means (10) in order to bring about the forward movement of the dolly (2) and is cinematically connected to the motor (25) by means of a mechanical transmission (28) in order to be rotated.

9. A unit according to Claim 8, in which the drive roller (26) engages the guide means (10a) with only a portion of its side wall.

10. A unit according to any one of Claims 5 to 7 and to Claim 9, in which the side wall of the drive roller (26) engages the at least one rail (10a) in a manner such as to be able to slide relative to the at least one rail in the axial direction of the roller whilst remaining in engagement with the rail.

11. A unit according to any one of Claims 8 to 10, in which the drive means (12) comprise a counteracting roller (27) positioned so as to be in contact with the guide means (10a) and to cooperate with the drive roller (26) to engage the guide means (10a).

12. A unit according to Claims 10 and 11, in which the drive roller (26) and the counteracting roller (27) are disposed substantially opposite one another so as to define a seat in which the at least one rail (10a) is inserted in a smooth-running and captive manner.

13. A unit according to any one of claims 1 to 12, in which the support means (11) can engage the guide means (10) in a captive manner.

14. A unit according to any one of Claims 1 to 13, in which the support means (11) comprise a plurality of idle wheels (22) connected to the dolly (2) so as to be able to spin, the idle wheels (22) being suitable for engaging the guide means (10) in order to move along them.

15. A unit according to Claim 10, in which a counteracting wheel (23) is associated with each idle wheel and is positioned in a manner such as to be in contact with the guide means (10) and to cooperate with the respective idle wheel (22) in order to engage the guide means (10).

16. A unit according to Claims 5 and 15, in which each counteracting wheel (23) is positioned in a manner such as to be disposed opposite the respective idle wheel (22) so as to define a seat in which the respective rail (10a, 10b) is inserted in a smooth-running and captive manner.

17. A unit according to any one of Claims 1 to 16 in which the drive means (12) are supported by the dolly (2) in a lateral position with reference to the forward direction of the dolly (2) along the guide means (10).

18. A unit according to Claims 5 to 17, in which the drive means (12) are positioned so as to be eccentric relative to the rail.

19. A unit according to any one of claims 1 to 18, comprising an head (3) which is supported by the dolly (2) and can support the filming device (C).

20. A unit according to any one of Claims 1 to 19, in which:
- the dolly (2) comprises a support structure (15) and a slide (32) which is supported slidably by the support structure (15) so as to be able to slide between two opposite travel-limit positions along an axis (K-K) transverse the forward direction of the dolly (2) along the guide means (10), and
- the dolly (2) comprises resilient means (33) for acting on the slide (32) so as to keep the slide (32), with a predetermined resilient load, in an intermediate position between the travel-limit positions,
the slide (32) being arranged for supporting the filming device (C).

21. A unit according to Claim 19 and Claim 20 in which the head (3) is supported by the slide (32).
